# EUROPEAN PATENT APPLICATION

(11) **EP 4 700 946 A1**
(43) Date of publication of application: **25.02.2026**
(21) Application number: 24864541.8
(22) Date of filing: 05.09.2024
(51) Int. Cl.: H01M 50/289, H01M 50/242, H01M 50/244, H01M 50/204

(54) **BATTERY CELL, BATTERY AND ELECTRICAL APPARATUS**

(30) Priority: 13.09.2023 CN 202322490832 U
(71) Applicant: Contemporary Amperex Technology Co., Limited, Ningde, Fujian 352100 (CN)
(72) Inventor: WU, Kai, Ningde, Fujian 352100 (CN); LUO, Yan, Ningde, Fujian 352100 (CN); LIN, Denghua, Ningde, Fujian 352100 (CN); CAO, Mengkai, Ningde, Fujian 352100 (CN); WU, Yu, Ningde, Fujian 352100 (CN); JIANG, Xiangwei, Ningde, Fujian 352100 (CN); CHEN, Xinxiang, Ningde, Fujian 352100 (CN); CHEN, Long, Ningde, Fujian 352100 (CN); ZHENG, Yulian, Ningde, Fujian 352100 (CN); WANG, Peng, Ningde, Fujian 352100 (CN)
(74) Representative: Ziebig Hengelhaupt Intellectual Property Attorneys Patentanwaltskanzlei PartGmbB
(86) International application number: PCT/CN2024/117250
(87) International publication number: WO 2025/055821

(57) **Abstract**

A battery cell (20) is disclosed, where the battery cell (20) includes: a housing (22), the housing (22) including a bottom wall (221), a top plate (223), and a plurality of side walls (222), where the side walls (222) connect the top plate (223) and the bottom wall (221), and the bottom wall (221), the plurality of side walls (222), and the top plate (223) form an accommodating space; a cell (21), disposed in the accommodating space; and a support plate (23), disposed in the accommodating space and is clamped between the side wall (222) and the cell (21).

## Description

### CROSS-REFERENCE TO RELATED APPLICATIONS

The present application claims priority to Chinese Utility Model Application No. 2023224908323, filed with the China National Intellectual Property Administration on September 13, 2023 and entitled "BATTERY CELL, BATTERY, AND ELECTRIC APPARATUS", which is incorporated herein by reference in its entirety.

### TECHNICAL FIELD

The present disclosure relates to the field of battery technologies, and in particular, to a battery cell, a battery, and an electric apparatus.

### BACKGROUND

Batteries, as the core of power supply for electric apparatuses, directly affect the use reliability and safety of the electric apparatuses due to its safety and stability. When an electric apparatus is subjected to collision or impact, a battery is prone to deformation or even damage to an internal battery cell, thereby affecting the safety of users. Therefore, the issue of how to improve the safety and reliability of a battery cell urgently needs to be addressed.

### SUMMARY

According to a first aspect, the present application provides a battery cell. The battery cell includes: a housing, the housing including a bottom wall, a top plate, and a plurality of side walls, where the plurality of side walls connect the top plate and the bottom wall, and the bottom wall, the plurality of side walls, and the top plate form an accommodating space; a cell, disposed in the accommodating space; and a support plate, disposed in the accommodating space and is clamped between the side wall and the cell.

Through the above configuration, the battery cell forms an integral structure through the cell, the support plate, and the housing. The support plate can support the cell and limit the movement of the cell within the housing, thereby reducing the possibility of a tab of the cell being torn off.

In some embodiments, the support plate includes at least two side support plates, where the side support plates are located on opposite sides of the cell and are disposed between the cell and the side wall.

Through the above configuration, the side support plate disposed between the cell and the side wall can support the cell in the left and right directions, limiting the movement of the cell in the left and right directions, thereby reducing the possibility of the tab being torn off due to the movement of the cell, effectively protecting the connection between the tab and the cell.

In some embodiments, the battery cell further includes a bottom support plate, where the bottom support plate is located on a side of the cell that is adjacent to at least two side support plates, and is disposed between the cell and the side wall.

Through the above configuration, the bottom support plate disposed between the cell and the side wall can support the cell in the upward and downward directions, limiting the movement of the cell in the upward and downward directions, thereby reducing the possibility of the tab being torn off due to the movement of the cell, effectively protecting the connection between the tab and the cell.

In some embodiments, one end of each of the two side support plates close to the bottom support plate is connected to the bottom support plate.

Through the above configuration, the side support plate and the bottom support plate are connected as a whole, where the support plate can guide the cell during insertion into the housing, facilitating the insertion of the cell into the housing while limiting the movement of the cell on opposite sides.

In some embodiments, the two side support plates and the bottom support plate are integrally formed.

This configuration enables a stable connection between the side support plate and the bottom support plate, thereby allowing the support plate to better support the cell.

In some embodiments, a thickness of the side support plate is equal to a thickness of the bottom support plate.

Through the above configuration, the side support plate and the bottom support plate have similar strength, allowing for uniform stress distribution, resulting in a more stable structure for the support plate that is easier to process mold.

In some embodiments, a first fillet is formed on an inner side of a connection between the side support plate and the bottom support plate, and a second fillet is formed on an outer side of the connection between the side support plate and the bottom support plate, where a radius of the first fillet is not less than a difference between a radius of the second fillet and the thickness of the side support plate or the bottom support plate.

Through the above configuration, providing the first fillet and the second fillet can guide the cell during insertion into the housing, making it easier to install the cell. Additionally, the radius of the first fillet being not less than the difference between the radius of the second fillet and the thickness of the side support plate or the bottom support plate ensures a reasonable thickness at the connection between the side support plate and the bottom support plate, reducing stress concentration.

In some embodiments, a third fillet is formed on an inner side of the side wall of the housing, and the radius of the second fillet is greater than or equal to a radius of the third fillet.

Through the above configuration, the stress generated when the cell is inserted into the housing can be further reduced, improving the stress conditions among the cell, the support plate, and the housing, thereby enhancing the structural strength of the battery cell.

In some embodiments, the support plate has a first side surface facing the bottom wall and a second side surface facing away from the cell, a fourth fillet is formed at a connection between the first side surface and the second side surface, and a fifth fillet is formed on an inner side of a connection between the side wall and the bottom wall of the housing, where a radius of the fourth fillet is greater than or equal to a radius of the fifth fillet.

Through the above configuration, providing the fourth fillet and the fifth fillet can better reduce stress concentration and reduce impact on the assembly precision of the battery cell. Additionally, the radius of the fourth fillet being greater than or equal to the radius of the fifth fillet facilitates the insertion of the support plate into the housing, thereby facilitating processing operations.

In some embodiments, the side wall includes a first side wall, a second side wall, and a third side wall connected in sequence, where the first side wall and the third side wall are oppositely disposed, the first side wall is provided with a terminal post, the bottom support plate is located between the cell and the third side wall, and the side support plate is located between the cell and the second side wall.

Through the above configuration, the bottom support plate and the side support plate can better limit the shaking of the cell in the upward, downward, left, and right directions, reducing the risk of tab breakage.

In some embodiments, the bottom wall and the plurality of side walls are integrally formed to constitute a battery box, where the top plate covers an opening of the battery box, and the top plate is a wall with the largest area in the housing.

Through the above configuration, the cell can be installed into the accommodating space from the side of the housing with the largest area, and the battery box can effectively accommodate the cell.

In some embodiments, a flange edge is connected to a side of the side wall away from the bottom wall, where the flange edge extends from an end of the side wall away from the bottom wall toward an outside of the accommodating space, and the top plate is connected to the flange edge of the housing to accommodate the cell in cooperation with the housing.

Through the above configuration, a distance between a connection position of the top plate and the flange edge and the cell is increased, which is conducive to reducing the possibility of damage to the cell due to light leakage during the connection process of the top plate and the flange edge. In addition, this can also reduce the damage to the cell due to particulate matter falling into the interior of the cell, thus protecting the cell and improving the reliability and safety of the battery cell.

In some embodiments, the cell includes a main body portion and a tab, and a length of the side support plate is greater than or equal to a length of the side surface of the main body portion in abutment with the support plate.

Through the above configuration, the side support plate can comprehensively support the cell, increasing a stressed area of the cell.

In some embodiments, the cell includes a main body portion and a tab, and a plurality of support plates are disposed on one side of the cell, where a length of each support plate is less than a length of the side surface of the main body portion in abutment with the support plate, and the support plates are spaced apart from each other.

Through the above configuration, providing a plurality of side support plates spaced apart on one side of the cell saves material compared to providing a single side support plate on one side of the cell, thereby reducing costs. Installing a cell with a plurality of side support plates in the battery cell can effectively reduce the weight of the battery cell.

In some embodiments, an outer surface of the cell is wrapped with an insulating film, and the support plate is thermally fused to the insulating film.

Through the above configuration, the support plate is fixed to the insulating film, preventing displacement of the support plate and enhancing the stability of the support plate.

In some embodiments, the support plate is connected to the housing.

Through the above configuration, the support plate is fixed to the housing, preventing displacement of the support plate and enhancing the stability of the support plate. In some embodiments, along a direction from the bottom wall to the top plate, a height of the support plate is not greater than a height of the cell.

This configuration can reduce the influence of the height of the support plate along the direction from the bottom wall to the top plate on the effective connection between the side wall of the cell and the bottom wall and top plate. The support plate supports the cell without increasing the height of the battery cell, thereby effectively protecting the cell.

In some embodiments, the support plate is elastic, and when the cell is located in the accommodating space, the cell compresses the support plate.

Through the above configuration, the support plate can better support the cell while facilitating the insertion of the cell into the housing.

According to a second aspect, the present application provides a battery, where the battery includes the battery cell according to any one of the above embodiments.

According to a third aspect, the present application provides an electric apparatus, where the electric apparatus includes the battery according to any one of the above embodiments, and the battery is configured to supply power to the electric apparatus.

The above descriptions are merely an overview of the technical solutions of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. In addition, in all the accompanying drawings, the same reference signs represent the same components. In the drawings:
FIG. 1 is a schematic structural diagram of a vehicle according to one or more embodiments;
FIG. 2 is a schematic structural exploded view of a battery according to one or more embodiments;
FIG. 3 is a schematic structural diagram of a battery cell according to one or more embodiments;
FIG. 4 is a schematic structural exploded view of a battery cell according to one or more embodiments;
FIG. 5 is a cross-sectional view of a battery cell according to one or more embodiments;
FIG. 6 is an enlarged schematic diagram of part D in FIG. 5;
FIG. 7 is another cross-sectional view of a battery cell according to one or more embodiments;
FIG. 8 is an enlarged schematic diagram of part B in FIG. 7;
FIG. 9 is another cross-sectional view of a battery cell according to one or more embodiments; and
FIG. 10 is an enlarged schematic diagram of part C in FIG. 9.

Reference signs in specific embodiments are described as follows:
1000. vehicle; 200. controller; 300. motor; 100. battery; 10. box; 11. first portion; 12. second portion;
20. battery cell; 21. cell; 211. main body portion; 212. tab; 22. housing; 221. bottom wall; 222. side wall; 2221. first side wall; 2222. second side wall; 2223. third side wall; 223. top plate; 224. terminal post; 225. flange edge; 23. support plate; 231. bottom support plate; 232. side support plate; 233. first side surface; 234. second side surface; 235. third side surface; 236. fourth side surface; 24. battery box; 241. opening; R1. first fillet; R2. second fillet; R3. third fillet; R4. fourth fillet; and R5. fifth fillet.

### DESCRIPTION OF EMBODIMENTS

The following describes in detail embodiments of technical solutions of the present application The following embodiments are merely intended for a clearer description of the technical solutions of the present application and therefore are merely used as examples which do not constitute any limitation on the protection scope of the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of some embodiments of the present application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of the present application, the term "a plurality of" means more than two (inclusive). Similarly, "a plurality of groups" means more than two (inclusive) groups, and "a plurality of pieces" means more than two (inclusive) pieces, unless otherwise specifically defined.

In this specification, reference to "embodiment" means that specific features, structures, or characteristics described with reference to the embodiment may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art the embodiments described herein may be combined with other embodiments.

In the description of some embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of the present application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of the present application rather than indicating or implying that the means or components mentioned must have specific orientations or must be constructed or manipulated according to specific orientations, and therefore shall not be construed as any limitation on the embodiments of the present application.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

Currently, from the perspective of market development, application of traction batteries is becoming more and more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace.

The present application provides an electric apparatus, and the electric apparatus may include, but is not limited to, a mobile phone, a tablet computer, a computer, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like. The electric apparatus may include a battery, and the electric apparatus may use the battery to provide electrical energy to achieve the corresponding functions of the electric apparatus.

During use, batteries encounter various complex operating conditions. When a battery vibrates, it causes the battery cell to vibrate, thereby driving the cell to vibrate up, down, left, and right. Vibration of the cell can easily lead to the breakage of the tab, causing the current loop to break, thereby affecting the use of the battery. To reduce the influence of vibration on the cell, related technologies introduce reinforcement or cushioning components on the outer side of the battery to improve the overall safety performance of the battery. However, such solutions have issues, such as increased overall weight of the battery and lower strength of the battery cell.

Based on the above considerations, to address the technical problems of battery cells in the prior art, the present application proposes a battery cell, where the battery cell can limit the vibration of the cell, reduce the possibility of tab breakage, and facilitate the insertion of the cell into the housing.

The present application provides an electric apparatus, and the electric apparatus may include, but is not limited to, a mobile phone, a tablet computer, a computer, an electric toy, an electric tool, an electric bicycle, an electric vehicle, a ship, and a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like. The electric apparatus may include a battery, and the electric apparatus may use the battery to provide electrical energy to achieve the corresponding functions of the electric apparatus.

For ease of description, the electric apparatus of an embodiment of the present application being a vehicle is used as an example for description of the following embodiments.

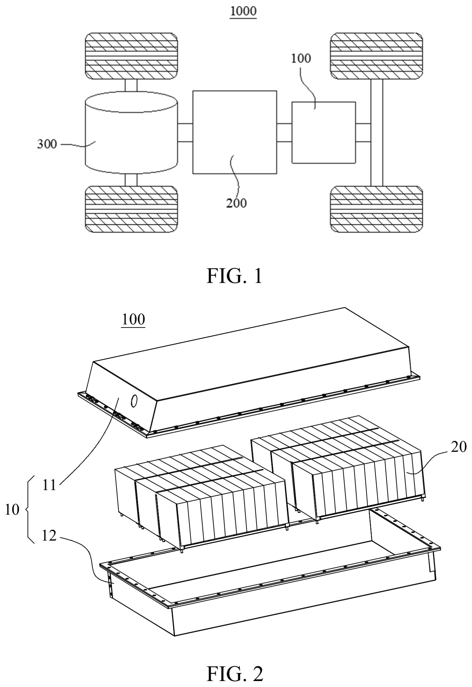

Referring to FIG. 1, FIG. 1 is a schematic structural diagram of a vehicle according to one or more embodiments.

The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

To enhance the performance of the electric apparatus, the present application further provides a battery 100. Referring to FIG. 2, FIG. 2 is a schematic structural exploded view of a battery according to one or more embodiments. The shape of the battery 100 includes, but is not limited to square. In another embodiments, the shape of the battery 100 may also be cylindrical, square, or any other shape. The battery 100 may be an energy storage device or the like. The energy storage device is a type of battery 100 that can be used in power grids, household, or commercial scenarios for storing and/or releasing electrical energy. The energy storage device may be an energy storage cabinet, an energy storage container, or the like.

In some embodiments, the battery 100 may include a box 10 and a battery cell 20, where the battery cell 20 is accommodated within the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together, and the first portion 11 and the second portion 12 jointly define an accommodating space for accommodating the battery cell 20. The second portion 12 may be a hollow structure with an opening at one end, the first portion 11 may be a plate-shaped structure, and the first portion 11 covers the opening side of the second portion 12 so that the first portion 11 and the second portion 12 jointly define the accommodating space. Alternatively, both the first portion 11 and the second portion 12 may be hollow structures with an opening at one side, and the opening side of the first portion 11 is engaged with the opening side of the second portion 12. Certainly, the box 10 formed by the first portion 11 and the second portion 12 may be of various shapes, for example, cylinder or cuboid.

In the battery 100, the battery cells 20 may be present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box. The battery 100 may further include other structures. For example, the battery 100 may further include a busbar configured to implement electrical connection between the plurality of battery cells.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

The manufacturing methods of the battery 100 include lamination and winding, that is, the battery 100 can be divided into laminated batteries and wound batteries. Laminated batteries have uniform current collection effects, low internal resistance, and high specific power but require extremely high mold precision, high equipment investment; moreover, laminated batteries have complex processes with low production efficiency. Wound batteries are simple to manufacture, have moderate requirements for equipment precision during sheet production and assembly processes, resulting in high production efficiency and lower costs. In terms of performance, wound batteries exhibit excellent high and low temperature performance, very fast charging, ultra-long service life, stable high output voltage, strong structure, and strong shock resistance.

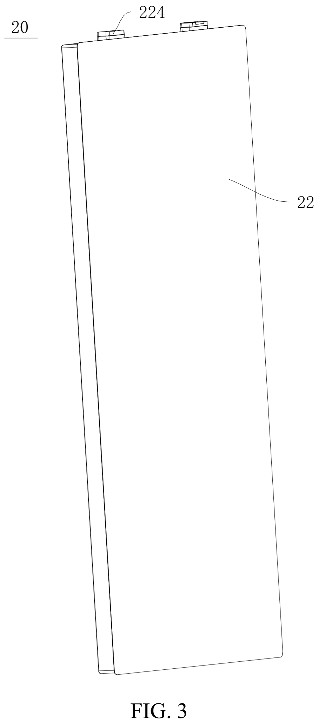

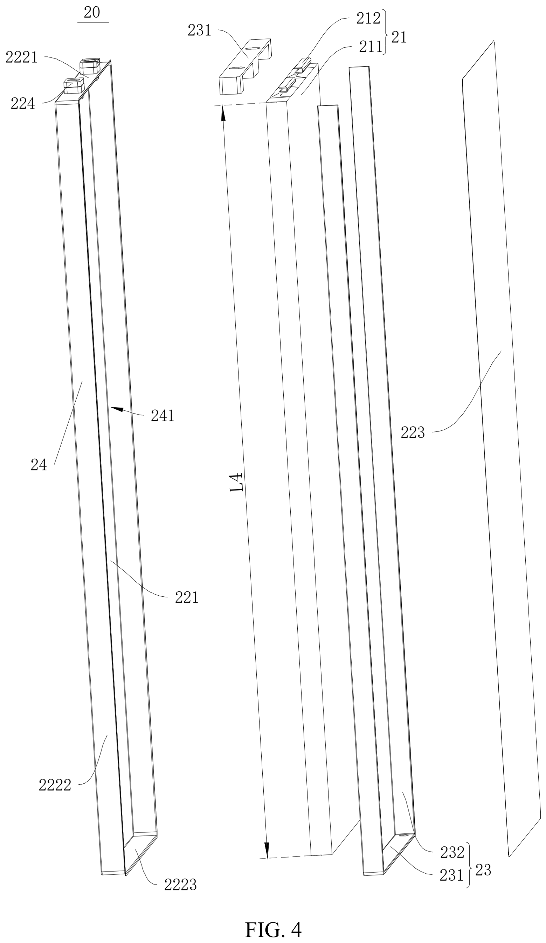

Referring to FIG. 3 and FIG. 4, FIG. 3 is a schematic structural diagram of a battery cell according to one or more embodiments, and FIG. 4 is a schematic structural exploded view of a battery cell according to one or more embodiments. The battery cell 20 is a smallest element constituting the battery. As shown in FIG. 4, the battery cell 20 of this embodiment includes a cell 21, a housing 22, and a support plate 23.

The housing 22 includes a bottom wall 221, a top plate 223, and a plurality of side walls 222. The plurality of side walls 222 connect the top plate 223 and the bottom wall 221. The bottom wall 221, the plurality of side walls 222, and the top plate 223 form an accommodating space. The cell 21 is disposed in the accommodating space. The support plate 23 is disposed in the accommodating space. The support plate 23 is clamped between the side wall 222 and the cell 21.

Specifically, the cell 21 is a component in which an electrochemical reaction takes place in the battery cell 20.

The housing 22 is an assembly configured to form the internal environment of the battery cell 20, where the formed internal environment may be configured to accommodate the cell 21, an electrolyte, and other components. The housing 22 may contain one or more cells 21. The housing 22 includes the bottom wall 221, the side wall 222, and the top plate 223. The bottom wall 221, the side wall 222, and the top plate 223 may be independent components, with openings provided at the connections between the side wall 222 and the bottom wall 221 and top plate 223. Through the opening, the top plate 223 and the side wall 222 cover the opening to form the internal environment of the battery cell 20. Without limitation, the bottom wall 221 and the side wall 222 may be integrally formed, meaning that the bottom wall 221 and the side wall 222 form a shared connection surface before other components are inserted into the housing, and then, the housing 22 is covered with the top plate 223 when the interior of the housing 22 needs to be enclosed. In another embodiments, the top plate 223 and the side wall 222 may also be integrally formed, meaning that the top plate 223 and the side wall 222 form a shared connection surface before other components are inserted into the housing, and then, the housing 22 is covered with the bottom wall 221 when the interior of the housing 22 needs to be enclosed.

The housing 22 may be of various shapes and sizes, including but not limited to a cuboid shape, a cylindrical shape, a hexagonal prism shape, and the like. The shape of the housing 22 may be determined based on the specific shape and size of the cell 21. The housing 22 may be made of various materials, including but not limited to copper, iron, aluminum, stainless steel, aluminum alloy, plastic, and the like.

The support plate 23 is configured to support the cell 21. The support plate 23 is placed between the side wall 222 and the side surface of the adjacent cell 21. The support plate 23 is provided in at least one, specifically, the support plate 23 may be provided in one, two, three, or more. The shape of the support plate 23 corresponds to the shape of the side surface of the adjacent cell 21. For example, the side surface of the cell 21 is plate-shaped, and the support plate 23 adjacent to the side surface of the cell 21 is correspondingly plate-shaped. When the battery cell 20 is subjected to external impact, the support plate 23 can absorb part of the impact force, reducing the influence of impact force on the cell 21.

In a specific embodiment, a plurality of side surfaces of the cell 21 and the side wall 222 clamp the support plate 23 in an interference fit manner. This allows for a secure connection among the cell 21, the housing 22, and the support plate 23, thereby enabling the support plate 23 to better support the cell 21.

Through the above configuration, the battery cell 20 forms an integral structure through the cell 21, the support plate 23, and the housing 22. The support plate 23 can support the cell 21 and limit the movement of the cell 21 within the housing 22, thereby reducing the possibility of a tab 212 of the cell 21 being torn off.

In a specific embodiment, the support plate 23 is a plastic plate.

Due to the stable properties of plastic plate, the support plate 23 is placed on the side of the cell 21, ensuring that the support plate 23 does not react with the electrolyte. The plastic plate facilitates bonding and can also reduce the possibility of internal short circuits in the battery cell 20.

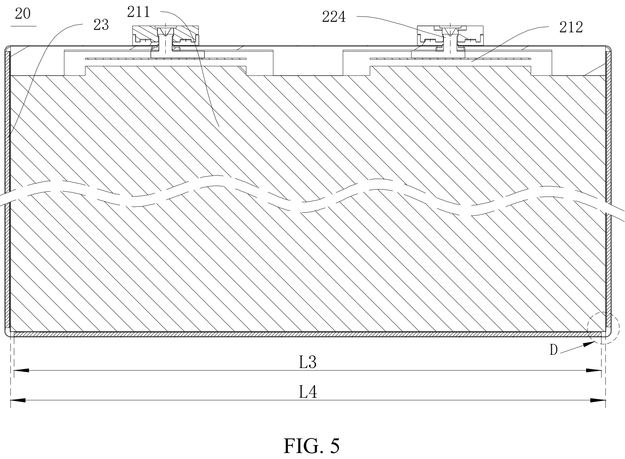

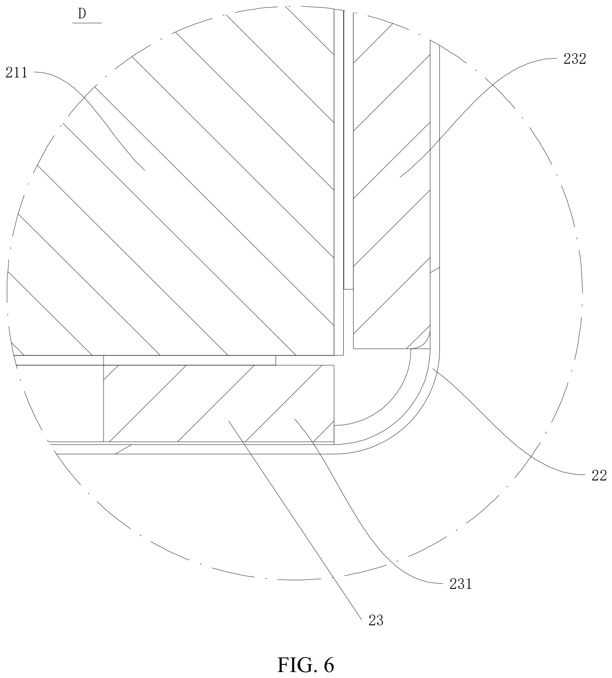

Referring to FIG. 5 and FIG. 6, FIG. 5 is a cross-sectional view of a battery cell according to one or more embodiments; and FIG. 6 is an enlarged schematic diagram of part D in FIG. 5. In combination with FIG. 3 to FIG. 4, according to some embodiments of the present application, the support plate 23 includes at least two side support plates 232, where the side support plates 232 are located on opposite sides of the cell 21 and disposed between the cell 21 and the side wall 222.

Specifically, the side support plate 232 is configured to support opposite sides of the cell 21. The opposite sides of the cell 21 may be the left and right sides. One side support plate 232 is disposed on each of the left and right sides of the cell 21, the side support plate 232 is adjacent to the bottom support plate 231, and the side support plate 232 is disposed between the cell 21 and the side wall 222. The side support plate 232 can fix the positions of the opposite sides of the cell 21, limiting the movement of the cell 21 in the direction of the opposite sides.

Through the above configuration, the side support plate 232 disposed between the cell 21 and the side wall 222 can support the cell 21 in the left and right directions, limiting the movement of the cell 21 in the left and right directions, thereby reducing the possibility of the tab 212 being torn off due to the movement of the cell 21, effectively protecting the connection between the tab 212 and the cell 21.

According to some embodiments of the present application, a bottom support plate 231 is further included, where the bottom support plate 231 is located on a side of the cell 21 that is adjacent to at least two side support plates 232, and is disposed between the cell 21 and the side wall 222.

The bottom support plate 231 is configured to support the cell 21. The bottom support plate 231 is located in the accommodating space. One bottom support plate 231 is located on a side of the cell 21 that is adjacent to at least two side support plates 232, for example, the bottom support plate 231 is located on a lower side of the cell 21. The shape of the bottom support plate 231 matches the shape of the side of the adjacent cell 21. For example, the lower side of the cell 21 is plate-shaped, and the bottom support plate 231 is correspondingly plate-shaped. In another embodiments, when an upper side of the cell 21 is provided with a protruding tab 212, a bottom support plate 231 may also be disposed on the side of the cell 21 close to the tab 212, that is, the bottom support plate 231 is located on the upper side of the cell 21. The bottom support plate 231 close to the tab 212 can wrap around the protruding tab 212. The bottom support plate 231 is disposed between the cell 21 and the side wall 222, facilitating the insertion of the cell 21 into the housing 22, reducing extrusion deformation at the connection between the cell 21 and the housing 22, and limiting the movement of the cell 21 on the upper and lower sides.

Through the above configuration, the bottom support plate 231 disposed between the cell 21 and the side wall 222 can support the cell 21 in the upward and downward directions, limiting the movement of the cell 21 in the upward and downward directions, thereby reducing the possibility of the tab 212 being torn off due to the movement of the cell 21, effectively protecting the connection between the tab 212 and the cell 21.

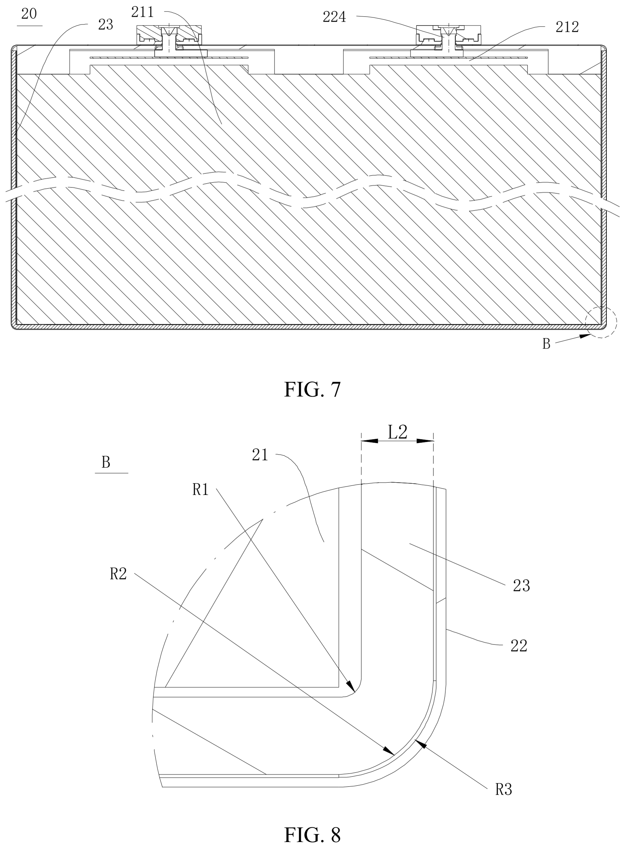

Referring to FIG. 7 and FIG. 8, FIG. 7 is another cross-sectional schematic diagram of a battery cell according to one or more embodiments; and FIG. 8 is an enlarged schematic diagram of part B in FIG. 7. In combination with FIG. 3 to FIG. 6, according to some embodiments of the present application, one end of each of the two side support plates 232 close to the bottom support plate 231 is connected to the bottom support plate 231.

Specifically, one end of each of the two side support plates 232 may be connected to opposite sides of the bottom support plate 231. The other end of each of the two side support plates 232 may extend in the same direction. The bottom support plate 231 is configured to support the cell 21. The bottom support plate 231 is located in the accommodating space. The bottom support plate 231 may be disposed on the side of the cell 21 away from the tab 212. The bottom support plate 231 may also be disposed on the side of the cell 21 close to the tab 212. Alternatively, one bottom support plate 231 may be disposed on each of the side of the cell 21 away from the tab 212 and the side of the cell 21 close to the tab 212. The shape of the bottom support plate 231 matches the shape of the side of the adjacent cell 21.

The side support plate 232 is configured to support opposite sides of the cell 21. The opposite sides of the cell 21 are the same as the opposite sides of the bottom support plate 231. The side support plate 232 is adjacent to the bottom support plate 231. The bottom support plate 231 is located between the two side support plates 232.

One end of each of the two side support plates 232 is connected to opposite sides of the bottom support plate 231, and the other end of each of the two side support plates 232 extends in the same direction, so the shape of the support plate 23 may be "U" shaped. For example, the bottom support plate 231 is disposed on the side of the cell 21 away from the tab 212, the side support plates 232 are disposed on opposite sides of the cell 21, and the side support plates 232 extend along the opposite sides of the cell 21.

Through this configuration, the side support plate 232 and the bottom support plate 231 are connected as a whole, and the support plate 23 can guide the cell 21 during insertion into the housing 22, facilitating the insertion of the cell 21 into the housing 22 while limiting the movement of the cell 21 on opposite sides.

According to some embodiments of the present application, the two side support plates 232 and the bottom support plate 231 are integrally formed. The support plate 23 is inserted into the housing 22 before the cell 21 is inserted into the housing 22. After the cell 21 is inserted into the housing, the support plate 23 supports the cell 21. An angle between the side support plate 232 and the bottom support plate 231 includes, but is not limited to, 45 degrees, 90 degrees, 135 degrees, and the like.

This configuration enables a stable connection between the side support plate 232 and the bottom support plate 231, thereby allowing the support plate 23 to better support the cell 21. According to some embodiments of the present application, a thickness of the side support plate 232 is equal to a thickness of the bottom support plate 231.

Specifically, the thickness of the side support plate 232 is the same as the thickness of the bottom support plate 231, so the strength of the side support plate 232 is similar to the strength of the bottom support plate 231. After the cell 21 is inserted into the housing 22, the side support plate 232 and the bottom support plate 231 are subjected to the same extrusion force, the side support plate 232 and the bottom support plate 231 undergo the same amount of compression, and the side support plates 232 and the bottom support plate 231 can evenly distribute the extrusion force.

Through this configuration, the side support plate 232 and the bottom support plate 231 have similar strength, allowing for uniform stress distribution, resulting in a more stable structure for the support plate 23 that is easier to process mold.

According to some embodiments of the present application, a first fillet R1 is formed on an inner side of a connection between the side support plate 232 and the bottom support plate 231. A second fillet R2 is formed on an outer side of the connection between the side support plate 232 and the bottom support plate 231. A radius of the first fillet R1 is not less than a difference between a radius of the second fillet R2 and the thickness of the side support plate 232 or the bottom support plate 231.

Specifically, the support plate 23 is disposed in the accommodating space, and the cell 21 is located within the support plate 23. The side of the connection between the side support plate 232 and the bottom support plate 231 facing the cell 21 forms the first fillet R1. The side of the connection between the side support plate 232 and the bottom support plate 231 facing the side wall 222 forms the second fillet R2.

The radius of the first fillet R1 is greater than or equal to the difference between the radius of the second fillet R2 and the thickness of the side support plate 232 or the bottom support plate 231, ensuring that the thickness at the connection between the side support plate 232 and the bottom support plate 231 is within a normal range, avoiding being too thin or too thick, while effectively alleviating stress concentration at the connection between the side support plate 232 and the bottom support plate 231, without affecting the installation precision of the battery cell 20.

Through the above configuration, providing the first fillet R1 and the second fillet R2 can guide the cell 21 during insertion into the housing 22, making it easier to install the cell 21. Additionally, the radius of the first fillet R1 being not less than the difference between the radius of the second fillet R2 and the thickness of the side support plate 232 or the bottom support plate 231 ensures a reasonable thickness at the connection between the side support plate 232 and the bottom support plate 231, reducing stress concentration.

According to some embodiments of the present application, a third fillet R3 is formed on an inner side of the side wall 222 of the housing 22. The radius of the second fillet R2 is greater than or equal to a radius of the third fillet R3.

Specifically, the side of the side wall 222 facing the cell 21 is provided with the third fillet R3. After the support plate 23 is inserted into the housing 22, the support plate 23 is adjacent to the side wall 222 of the housing 22, so that the second fillet R2 of the support plate 23 is adjacent to the third fillet R3 of the housing 22. The radius of the second fillet R2 is greater than or equal to the radius of the third fillet R3. When the support plate 23 is inserted into the housing 22, the connection between the side wall 222 and the bottom wall 221 can be better connected to the third fillet R3 of the side wall 222, thereby enhancing the structural strength of the battery cell 20.

Through the above configuration, stress generated when the cell 21 is inserted into the housing 22 can be further reduced, improving the stress conditions among the cell 21, the support plate 23, and the housing 22, thereby enhancing the structural strength of the battery cell 20.

In a specific embodiment, the radius of the third fillet R3 is 1 millimeter, and therefore, the radius of the second fillet R2 is greater than or equal to 1 millimeter. The radius of the second fillet R2 includes, but is not limited to, 1 millimeter, 1.1 millimeters, 1.2 millimeters, 1.25 millimeters, 1.3 millimeters, 1.5 millimeters, 1.7 millimeters, 1.8 millimeters, 2 millimeters, 3 millimeters, and the like.

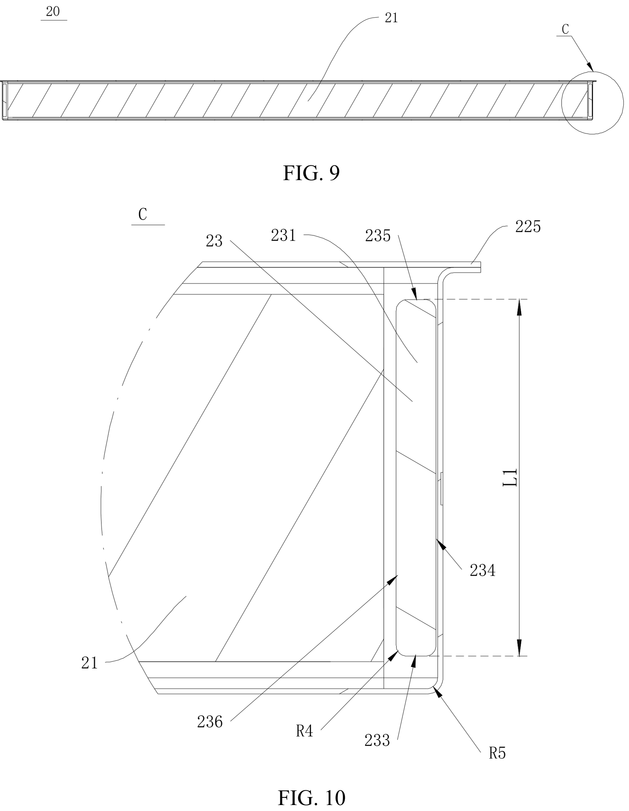

Referring to FIG. 9 and FIG. 10, FIG. 9 is another cross-sectional view of a battery cell according to one or more embodiments; and FIG. 10 is an enlarged schematic diagram of part C in FIG. 9. In combination with FIG. 3 to FIG. 8, according to some embodiments of the present application, the support plate 23 has a first side surface 233 facing the bottom wall 221 and a second side surface 234 facing away from the cell 21, a fourth fillet R4 is formed at a connection between the first side surface 233 and the second side surface 234, and a fifth fillet R5 is formed on the inner side of a connection between the side wall 222 and the bottom wall 221 of the housing 22, where a radius of the fourth fillet R4 is not greater than a radius of the fifth fillet R5.

Specifically, the first side surface is adjacent to the second side surface. A fourth fillet R4 is provided at the connection between the first side surface 233 and the second side surface 234 of the support plate 23. In one embodiment, the support plate 23 may further include a third side surface 235 opposite the first side surface 233 and a fourth side surface 236 opposite the second side surface 234. A fourth fillet R4 is provided at the connection between the first side surface 233 and the fourth side surface 236. A fourth fillet R4 is provided at the connection between the second side surface 234 and the third side surface 235. A fourth fillet R4 is provided at the connection between the third side surface 235 and the fourth side surface 236. The outer surface of the support plate 23 is provided with four fourth fillets R4. A fifth fillet R5 is formed on the side of the connection between the side wall 222 and the bottom wall 221 of the housing 22 facing the accommodating cavity. The radius of the fifth fillet R5 is less than or equal to the radius of the fourth fillet R4.

Through the above configuration, providing the fourth fillet R4 and the fifth fillet R5 can better reduce stress concentration, reducing impact on the assembly precision of the battery cell 20. Additionally, the radius of the fourth fillet R4 being greater than or equal to the radius of the fifth fillet R5 facilitates the insertion of the support plate 23 into the housing 22, thereby facilitating processing operations.

In a specific embodiment, the radius of the fifth fillet R5 is 0.2 millimeters, and therefore, the radius of the fourth fillet R4 is greater than or equal to 0.2 millimeters. The radius of the second fillet R2 includes, but is not limited to, 0.2 millimeters, 0.21 millimeters, 0.22 millimeters, 0.25 millimeters, 0.3 millimeters, 0.31 millimeters, 0.35 millimeters, 0.4 millimeters, 0.41 millimeters, 0.45 millimeters, 0.5 millimeters, 0.6 millimeters, 0.8 millimeters, 1 millimeter, and the like.

According to some embodiments of the present application, the side wall includes a first side wall, a second side wall, and a third side wall connected in sequence. The first side wall and the third side wall are oppositely disposed. The first side wall 2221 is provided with a terminal post 224. The bottom support plate 231 is located between the cell 21 and the third side wall 2223. The side support plate 232 is located between the cell 21 and the second side wall 2222.

Specifically, two second side walls 2222 may be provided. The two second side walls 2222 are respectively located on opposite sides of the first side wall 2221. One end of the second side wall 2222 is connected to the first side wall 2221, and the other end is connected to the third side wall 2223.

Through the above configuration, the bottom support plate 231 and the side support plate 232 can better limit the shaking of the cell 21 in the upward, downward, left, and right directions, reducing the risk of tab 212 breakage.

According to some embodiments of the present application, the bottom wall 221 and the plurality of side walls 222 are integrally formed to constitute a battery box 24, where the top plate 223 covers an opening 241 of the battery box 24, and the top plate 223 is the wall with the largest area in the housing 22.

Through the above configuration, the cell 21 can be installed into the accommodating space from the side of the housing 22 with the largest area, and the battery box 24 can effectively accommodate the cell 21.

According to some embodiments of the present application, a flange edge 225 is connected to a side of the side wall 222 away from the bottom wall 221, where the flange edge 225 extends from an end of the side wall 222 away from the bottom wall 221 toward an outside of the accommodating space, and the top plate 223 is connected to the flange edge 225 of the housing 22 to accommodate the cell 21 in cooperation with the housing 22.

Specifically, a flange edge 225 is connected to the side of the side wall 222 of the housing 22 away from the bottom wall 221. The flange edge 225 and the side wall 222 may be independent components. Alternatively, the flange edge 225 and the side wall 222 may be integrally formed. The flange edge 225 extends from the end of the side wall 222 away from the bottom wall 221, and the flange edge 225 extends outward from the accommodating space, so that the flange edge 225 is located on an outer periphery of the side wall 222.

The top plate 223 may be plate-shaped. The top plate 223 covers the opening of the accommodating space, and the top plate 223 is connected to the flange edge 225 of the housing 22. The top plate 223 is connected to the end of the flange edge 225 away from the cell 21. The connection position of the top plate 223 and the flange edge 225 depends on the shapes of the flange edge 225 and the top plate 223, which is not limited herein.

Through the above configuration, a distance between the connection position of the top plate 223 and the flange edge 225 and the cell 21 is increased, which is conducive to reducing the possibility of damage to the cell 21 due to light leakage during the connection process of the top plate 223 and the flange edge 225. In addition, this can also reduce the damage to the cell 21 due to particulate matter falling into the interior of the cell 21, thus protecting the cell 21 and improving the reliability and safety of the battery cell 20.

According to some embodiments of the present application, the cell 21 includes a main body portion 211 and a tab 212, and a length L3 of the support plate 23 is greater than or equal to a length L4 of the side surface of the main body portion 211 in abutment with the support plate 23.

Specifically, the tab 212 may be disposed at one end of the main body portion 211. The main body portion 211 is mainly formed by winding or stacking a positive electrode plate and a negative electrode plate, and a separator is generally disposed between the positive electrode plate and the negative electrode plate. The portions of the positive electrode plate and the negative electrode plate with active substances constitute the main body portion 211. The portions of the positive electrode plate and the negative electrode plate without active substances separately constitute the tab 212. The tab 212 includes a positive electrode tab and a negative electrode tab. The positive electrode tab and the negative electrode tab may be located together at one end of the main body portion 211 or be located at two ends of the main body portion 211 respectively. During the charging and discharging process of the battery, the positive electrode active substance and the negative electrode active substance react with the electrolyte, and the tab 212 is connected to the terminal post 224 to form a current loop.

The direction of the length L3 of the support plate 23 is the same as the direction of the length L4 of the side surface of the main body portion 211 in abutment with the support plate 23.

In a specific embodiment, the side wall 222 includes a first side wall 2221, a second side wall 2222, and a third side wall 2223 connected in sequence. The first side wall 2221 and the third side wall 2223 are oppositely disposed. The second side wall 2222 is disposed between the first side wall 2221 and the third side wall 2223. The support plate 23 is disposed between the first side wall 2221 and the main body portion 211, and along the direction parallel to the bottom wall 221 and the first side wall 2221, the length L3 of the support plate 23 is greater than or equal to the length L4 of the side surface of the main body portion 211 in abutment with the support plate 23.

In another specific embodiment, the side wall 222 includes a first side wall 2221, a second side wall 2222, and a third side wall 2223 connected in sequence. The first side wall 2221 and the third side wall 2223 are oppositely disposed. The second side wall 2222 is disposed between the first side wall 2221 and the third side wall 2223. The support plate 23 is disposed between the second side wall 2222 and the main body portion 211, and along the direction parallel to the bottom wall 221 and the second side wall 2222, the length L3 of the support plate 23 is greater than or equal to the length L4 of the side surface of the main body portion 211 in abutment with the support plate 23.

Through the above method, when the battery cell 20 experiences frequent or significant vibrations, the support plate 232 can comprehensively support the cell 21, increasing a stressed area of the cell 21, reducing the influence of vibrations on the cell 21.

According to some embodiments of the present application, the cell 21 includes the main body portion 211 and the tab 212, and a plurality of support plates 23 are disposed on one side of the cell 21, where the length L3 of each support plate 23 is less than the length L4 of the side surface of the main body portion 211 in abutment with the support plate 23, and the support plates 23 are spaced apart from each other.

Specifically, adjacent support plates 23 are spaced apart. The plurality of support plates 23 do not overlap each other. The plurality of support plates 23 abut the surface of the main body portion 211 in a non-overlapping arrangement. The direction of the length L3 of the support plate 23 is the same as the direction of the length L4 of the side surface of the main body portion 211 in abutment with the support plate 23.

In a specific embodiment, the side wall 222 includes a first side wall 2221, a second side wall 2222, and a third side wall 2223 connected in sequence. The first side wall 2221 and the third side wall 2223 are oppositely disposed. The second side wall 2222 is disposed between the first side wall 2221 and the third side wall 2223. The plurality of support plates 23 are disposed between the first side wall 2221 and the main body portion 211. Along the direction parallel to the bottom wall 221 and the first side wall 2221, the length L3 of the support plate 23 is less than the length L4 of the side surface of the main body portion 211 in abutment with the support plate 23.

In another specific embodiment, the side wall 222 includes a first side wall 2221, a second side wall 2222, and a third side wall 2223 connected in sequence. The first side wall 2221 and the third side wall 2223 are oppositely disposed. The second side wall 2222 is disposed between the first side wall 2221 and the third side wall 2223. The plurality of support plates 23 are disposed between the second side wall 2222 and the main body portion 211. Along the direction parallel to the bottom wall 221 and the second side wall 2222, the length L3 of the support plate 23 is less than the length L4 of the side surface of the main body portion 211 in abutment with the support plate 23.

Providing a plurality of side support plates 232 spaced apart on one side of the cell 21 saves material compared to providing a single side support plate 232 on one side of the cell 21, thereby reducing costs. Installing a cell 21 with a plurality of side support plates 232 in the battery cell 20 can effectively reduce the weight of the battery cell 20.

According to some embodiments of the present application, an outer surface of the cell 21 is wrapped with an insulating film (not shown in the figure), and the support plate 23 is thermally fused to the insulating film.

Specifically, the insulating film is wrapped around the outer side of the cell 21, and the insulating film is fixedly connected to the cell 21. The insulating film is similar to plastic paper. The cell 21 wrapped with the insulating film is inserted into the housing 22, and the insulating film is thermally fused to the support plate 23, ensuring a stable connection between the cell 21 and the support plate 23. The methods for thermally fusing the insulating film to the support plate 23 include, but are not limited to, using hot melt adhesive, electrical heating, and the like.

Through the above configuration, the support plate 23 is fixed to the insulating film, preventing displacement of the support plate 23 and enhancing the stability of the support plate 23.

According to some embodiments of the present application, the support plate 23 is connected to the housing 22. Specifically, the support plate 23 is fixedly connected to the side wall 222 of the housing 22. The connection methods include, but are not limited to, welding, bonding, thermal fusion, and the like.

Through the above configuration, the support plate 23 is fixed to the housing 22, preventing displacement of the support plate 23 and enhancing the stability of the support plate 23.

According to some embodiments of the present application, along the direction from the bottom wall 221 to the top plate 223, a height of the support plate 23 is not greater than a height of the cell 21.

Specifically, a height direction of the support plate 23 is the same as a height direction of the cell 21. On two sides of the cell 21 in the height direction, the cell 21 is respectively connected to the bottom wall 221 and the top plate 223. The height of the cell 21 is greater than or equal to the height of the support plate 23. This configuration reduces the influence of the height of the support plate 23 on the effective connection between the two sides of the cell 21 in the height direction and the bottom wall 221 and top plate 223. The support plate 23 supports the cell 21 without increasing the height of the battery cell 20, thereby effectively protecting the cell 21.

In a specific embodiment, the height L1 of the support plate 23 is not greater than 10 millimeters.

Specifically, the height L1 of the support plate 23 is not greater than 10 millimeters, including but not limited to, 10 millimeters, 9.5 millimeters, 9 millimeters, 8 millimeters, 7 millimeters, 6 millimeters, 5 millimeters, 4 millimeters, 3 millimeters, 2 millimeters, 1 millimeter, 0.5 millimeters, and the like. The height L1 of the support plate 23 is not greater than the height of the cell 21, and therefore, the height of the cell 21 is greater than or equal to 10 millimeters.

Through the above configuration, the height L1 of the support plate 23 being not greater than 10 millimeters facilitates reasonable setting of the height of the support plate 23 and facilitates processing operations.

According to some embodiments of the present application, referring to FIG. 6, a thickness L2 of the support plate 23 is not greater than 1 millimeter.

Specifically, the thickness of the bottom support plate 231 and the side support plates 232 is greater than or equal to 1 millimeter, including but not limited to, 1 millimeter, 2 millimeters, 3.5 millimeters, 5 millimeters, 8 millimeters, 10 millimeters, 15 millimeters, 20 millimeters, 1 centimeter, 1 decimeter, and the like.

Through the above configuration, the thickness L2 of the support plate 23 being not greater than 1 millimeter facilitates reasonable setting of the thickness L2 of the support plate 23 and facilitates processing operations.

According to some embodiments of the present application, the support plate 23 is elastic, and when the cell 21 is located in the accommodating space, the cell 21 compresses the support plate 23.

Specifically, the dimension of the support plate 23 in the direction from the cell 21 to the side wall 222 is the thickness of the support plate 23. When the support plate 23 is not inserted into the housing 22, the thickness of the support plate 23 is greater than the distance between the cell 21 and the side wall 222 of the housing 22. The support plate 23 exhibits a certain elasticity, allowing compression and rebound. The support plate 23 can be inserted into the housing 22 before the cell 21 is inserted into the housing 22. When the cell 21 is inserted into the housing 22, the support plate 23 is compressed, facilitating the entry of the cell 21 into the housing 22. After the cell 21 is inserted into the housing 22, the support plate 23 rebounds, the cell 21 closely fits with the support plate 23, the support plate 23 supports the cell 21, and an interference fit is formed between the cell 21 and the side wall 222 of the housing 22. When the battery cell 20 vibrates, the support plate 23 can buffer the influence of vibration on the cell 21, providing a certain degree of protection to the cell 21.

The material of the support plate 23 includes, but is not limited to, sponge, polypropylene, and the like. For example, the material may be irradiated cross-linked polypropylene foam (Irradiated cross-linked polypropylene foam, IXPP), microcellular polypropylene (Microcellular Polypropylene, MPP), or the like.

Through the above configuration, the support plate 23 can better support the cell 21 while facilitating the insertion of the cell 21 into the housing 22.

According to some embodiments of the present application, the present application further provides a battery 100, including the battery cell 20 according to any one of the above embodiments. The energy storage device is a type of battery 100 that can be used in power grids, household, or commercial scenarios for storing and/or releasing electrical energy. The energy storage device may be an energy storage cabinet, an energy storage container, or the like.

According to some embodiments of the present application, the present application further provides an electric apparatus, including the battery 100 according to any one of the above embodiments, where the battery 100 is configured to supply power to the electric apparatus.

The electric apparatus may be a mobile phone, a computer, a vehicle, or any device or system using the battery 100 as described above.

Finally, in a specific application scenario, a battery cell 20 includes a cell 21, a housing 22, and a support plate 23. The housing 22 includes a bottom wall 221, a side wall 222, and a top plate 223. The side wall 222 connects the top plate 223 and the bottom wall 221. The bottom wall 221, the side wall 222, and the top plate 223 form an accommodating space. The cell 21 is disposed in the accommodating space. The support plate 23 is disposed in the accommodating space. The support plate 23 is clamped between the side wall 222 and the cell 21. The support plate 23 includes a bottom support plate 231 and two side support plates 232 connected to the bottom support plate 231. One end of each of the two side support plates 232 is connected to opposite sides of the bottom support plate 231. The other end of each of the two side support plates 232 extends in the same direction. The side support plate 232 is perpendicular to the bottom support plate 231. A thickness of the side support plate 232 is equal to a thickness of the bottom support plate 231. A first fillet R1 is formed on an inner side of a connection between the side support plate 232 and the bottom support plate 231. A second fillet R2 is formed on an outer side of the connection between the side support plate 232 and the bottom support plate 231. A radius of the first fillet R1 is not less than a difference between a radius of the second fillet R2 and the thickness of the side support plate 232 or the bottom support plate 231. A third fillet R3 is formed on an inner side of the side wall 222 of the housing 22. The radius of the second fillet R2 is not greater than a radius of the third fillet R3. A fourth fillet R4 is formed on an outer surface of the support plate 23. A fifth fillet R5 is formed on an inner side of a connection between the side wall 222 and the bottom wall 221 of the housing 22. A radius of the fourth fillet R4 is not greater than a radius of the fifth fillet R5. A height of the support plate 23 is not greater than a height of the cell 21. A height L 1 of the support plate 23 is not greater than 10 millimeters. A thickness L2 of the support plate 23 is not greater than 1 millimeter.

The battery cell 20 forms an integral structure through the cell 21, the support plate 23, and the housing 22. The support plate 23 can support the cell 21 and limit the movement of the cell 21 within the housing 22, thereby reducing the possibility of the tab 212 of the cell 21 being torn off.

In conclusion, it should be noted that the above embodiments are for description of the technical solutions of the present application only rather than for limiting the present application. Although the present application has been described in detail with reference to the above embodiments, persons of ordinary skill in the art should appreciate that they can still make modifications to the technical solutions described in the above embodiments or make equivalent replacements to some or all technical features thereof without departing from the scope of the technical solutions in the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, **characterized in that** the battery cell comprises:
a housing, the housing comprising a bottom wall, a top plate, and a plurality of side walls, the side walls connecting the top plate and the bottom wall, wherein the bottom wall, the plurality of side walls, and the top plate form an accommodating space;
a cell, disposed in the accommodating space; and
a support plate, disposed in the accommodating space and clamped between the side wall and the cell.

2. The battery cell according to claim 1, **characterized in that** the support plate comprises at least two side support plates, wherein the side support plates are located on opposite sides of the cell and are disposed between the cell and the side wall.

3. The battery cell according to claim 2, **characterized by** further comprising a bottom support plate, wherein the bottom support plate is located on a side of the cell that is adjacent to at least two side support plates, and is disposed between the cell and the side wall.

4. The battery cell according to claim 3, **characterized in that** one end of each of the two side support plates close to the bottom support plate is connected to the bottom support plate.

5. The battery cell according to claim 4, **characterized in that** the two side support plates and the bottom support plate are integrally formed.

6. The battery cell according to claim 4 or 5, **characterized in that** a thickness of the side support plate is equal to a thickness of the bottom support plate.

7. The battery cell according to any one of claims 4 to 6, **characterized in that** a first fillet is formed on an inner side of a connection between the side support plate and the bottom support plate, and a second fillet is formed on an outer side of the connection between the side support plate and the bottom support plate, wherein a radius of the first fillet is not less than a difference between a radius of the second fillet and the thickness of the side support plate or the bottom support plate.

8. The battery cell according to claim 7, **characterized in that** a third fillet is formed on an inner side of the side wall of the housing, wherein the radius of the second fillet is greater than or equal to a radius of the third fillet.

9. The battery cell according to any one of claims 1 to 8, **characterized in that** the support plate has a first side surface facing the bottom wall and a second side surface facing away from the cell, a fourth fillet is formed at a connection between the first side surface and the second side surface, and a fifth fillet is formed on an inner side of a connection between the side wall and the bottom wall of the housing, wherein a radius of the fourth fillet is greater than or equal to a radius of the fifth fillet.

10. The battery cell according to any one of claims 3 to 8, **characterized in that** the side wall comprises a first side wall, a second side wall, and a third side wall connected in sequence, wherein the first side wall and the third side wall are oppositely disposed, the first side wall is provided with a terminal post, the bottom support plate is located between the cell and the third side wall, and the side support plate is located between the cell and the second side wall.

11. The battery cell according to any one of claims 1 to 10, **characterized in that** the bottom wall and the plurality of side walls are integrally formed to constitute a battery box, wherein the top plate covers an opening of the battery box, and the top plate is a wall with the largest area in the housing.

12. The battery cell according to any one of claims 1 to 11, **characterized in that** a flange edge is connected to a side of the side wall away from the bottom wall, wherein the flange edge extends from an end of the side wall away from the bottom wall toward an outside of the accommodating space, and the top plate is connected to the flange edge of the housing.

13. The battery cell according to any one of claims 1 to 12, **characterized in that** the cell comprises a main body portion and a tab, and a length of the support plate is greater than or equal to a length of a side surface of the main body portion in abutment with the support plate.

14. The battery cell according to any one of claims 1 to 12, **characterized in that** the cell comprises a main body portion and a tab, and a plurality of support plates are disposed on one side of the cell, wherein a length of each support plate is less than a length of a side surface of the main body portion in abutment with the support plate, and the support plates are spaced apart from each other.

15. The battery cell according to any one of claims 1 to 14, **characterized in that** an outer surface of the cell is wrapped with an insulating film, and the support plate is thermally fused to the insulating film.

16. The battery cell according to any one of claims 1 to 14, **characterized in that** the support plate is connected to the housing.

17. The battery cell according to any one of claims 1 to 16, **characterized in that** along a direction from the bottom wall to the top plate, a height of the support plate is not greater than a height of the cell.

18. The battery cell according to any one of claims 1 to 17, **characterized in that** the support plate is elastic, and when the cell is located in the accommodating space, the cell compresses the support plate.

19. A battery, **characterized in that** the battery comprises the battery cell according to any one of claims 1 to 18.

20. An electric apparatus, **characterized in that** the electric apparatus comprises the battery according to claim 19, wherein the battery is configured to supply power to the electric apparatus.
